(19) Europäisches Patentamt
European Patent Office
Office européen des brevets

(11) **EP 1 241 462 B1**

(12) **EUROPÄISCHE PATENTSCHRIFT**

(45) Veröffentlichungstag und Bekanntmachung des Hinweises auf die Patenterteilung:
**23.12.2009   Patentblatt 2009/52**

(51) Int Cl.:
***G01M 13/02*** *(2006.01)*

(21) Anmeldenummer: **01106105.8**

(22) Anmeldetag: **13.03.2001**

(54) **Kontinuierliche Messung zum Ermitteln der geeigneten Einbaulage oder zur Qualitätsprüfung von Radsatzpaaren**

Continuous measurement for detecting the correct positioning or for quality testing of gear pairs

Mesure en continu pour la détection du positionnement correct ou pour le test de qualité de paires d'engrenages

(84) Benannte Vertragsstaaten:
**AT BE CH CY DE DK ES FI FR GB GR IE IT LI LU MC NL PT SE TR**

(43) Veröffentlichungstag der Anmeldung:
**18.09.2002   Patentblatt 2002/38**

(73) Patentinhaber: **Klingelnberg AG**
**8005 Zürich (CH)**

(72) Erfinder:
 • **Bartelt, Volker, Dipl.-Ing.**
 **Gippingen,**
 **5316 Leuggern (CH)**
 • **Pahud, Christian**
 **8057 Zürich (CH)**

(74) Vertreter: **OK pat AG**
**Chamerstrasse 50**
**6300 Zug (CH)**

(56) Entgegenhaltungen:
**EP-A- 0 325 688     DE-C1- 19 519 429**
**US-A- 3 611 800     US-A- 5 307 676**
**US-A- 5 642 297**

• **STADTFELD H J: "EIN NEUES VERFAHREN ZUR KEGELRAD-PRUEFUNG UND -OPTIMIERUNG" VDI Z, VDI VERLAG GMBH. DUSSELDORF, DE, Bd. 133, Nr. 6, 1. Juni 1991 (1991-06-01), Seiten 176-177, XP000237557 ISSN: 0042-1766**
• **"Der CNC-Kegelradtester" 5. Juli 1996 (1996-07-05), OERLIKON GEAR TECHNOLOGY , XP000672085**
• **BAUSSMANN, LEGLER: "Detektierung und Markierung von fehlerhaften Zahnrädern in der Fertigung" ANTRIEBSTECHNIK, Bd. 39, Nr. 5, Mai 2000 (2000-05), XP000937174**

## Beschreibung

Die Erfindung betrifft ein Verfahren zum Ermitteln der geeigneten Einbaulage oder zur Qualitätsprüfung von Radsatzpaaren, sowie eine entsprechende Vorrichtung, eine Auswerteeinheit und ein Softwaremodul zum Ausführen des Verfahrens. Insbesondere dient die Erfindung der Ermittlung der geeigneten Einbaulage eines Radsatzpaares, wie es in Getrieben Verwendung findet.

### HINTERGRUND DER ERFINDUNG

Zahnräder kommen in vielen verschiedenen technischen Gebieten zur Anwendung. Dabei greift üblicherweise ein erstes Zahnrad in ein zweites Zahnrad ein. Um ein sauberes Ablaufen der Zahnräder zu gewährleisten, ist es wichtig, die beiden Zahnräder beim Einbau in einer geeigneten Art und Weise in einem räumlichen Koordinatensystem zueinander in Bezug zu bringen.

Ein typisches Beispiel für zwei ineinandergreifende Zahnräder ist ein Getriebe, wo ein Tellerrad (als erstes Zahnrad) und ein Ritzel (als zweites Zahnrad) als Radsatzpaar zusammenwirken. Um eine gutes Abrollverhalten des Ritzels entlang des Tellerrades zu gewährleisten, wird vor dem Zusammenbau des Getriebes eine geeignete Einbaulage, typischerweise in Form von sogenannten Einbaumassen, ermittelt. Diese Einbaumasse werden dann beim Zusammenbau möglichst genau realisiert.

Es ist ein Messverfahren bekannt, dass zur Ermittlung der Einbaumasse zur Anwendung kommt. Nach dem bekannten Verfahren wird das Radsatzpaar in Eingriff gebracht und hintereinander mehrere diskrete Einbaulagen (Stützpunkte) eingestellt. Gemäss diesem bekannten Verfahren wird dann in den diskreten Stützpunkten jeweils eine Messung vorgenommen. In jeder dieser Einbaulagen wird eine Körperschallmesskurve oder eine Einflankenwälzprüfungskurve aufgezeichnet. Aus den verschiedenen Körperschallmesskurven wird rechnerisch eine Bewertung der Einbaulagen vorgenommen und eine geeignete Einbaulage ermittelt. Bei der rechnergestützten Auswertung können vorgegebene Kennwerte berücksichtigt und gewichtet werden. Es ist ein Nachteil dieses Verfahrens, dass es relativ zeitaufwendig ist, die einzelnen Einbaulagen anzufahren und dann in jeder Einbaulage eine Körperschallanalyse oder Einflankenwälzprüfung durchzuführen. Ein ähnliches Verfahren wurde von STADTFELD H J: "EIN NEUES VERFAHREN ZUR KEGELRADPRÜFUNG UND-OPTIMIERUNG" beschrieben. Es offenbart ein Verfahren zur Kegelradsprüfung und-optimierung, das auf den direkten Zusammenhang zwischen dem Drehübertragungsverlauf und der Geräuschabstrahlung basiert.

Die Einflankenwälzprüfung (EWP) erlaubt den Vergleich der Drehbewegung der beiden Spindeln (bzw. der auf den Spindeln sitzenden Zahnräder). MitteJs EWP kann man zum Beispiel Information über den Zahneingriff gewinnen. Üblicherweise erkennt man in dem Gesamtsignal der EWP einen kurzwelligen Signalanteil, der aus der Verzahnungsgeometrie stammt, und einen langweiligen Anteil, der auf einen Rundlauffehler oder auf Radgeometrieabweichungen der beiden Zahnräder zurückzuführen ist.

Es stellt sich die Aufgabe, einen Messansatz zu entwickeln, der eine schnellere Ermittlung der geeigneten Einbaulage von Radsatzpaaren oder eine Qualitätsprüfung von Radsatzpaaren ermöglicht.

Die Aufgabe wird erfindungsgemäss durch ein Verfahren, das die im Anspruch 1 angegebenen Schritte umfasst, gelöst.

Es ist ein Vorteil des erfindungsgemässen Verfahrens, dass es eine Prüfung von Radsatzpaaren ohne wesentliche Nebenzeiten erlaubt. Im Gegensatz zu dem eingangs beschriebenen Messverfahren, bei dem nur in diskreten Stützpunkten Messungen vorgenommen werden, ermöglicht das erfindungsgemässe Verfahren einen wesentlich kürzeren Messablauf. Dies ist von kommerzieller Wichtigkeit, da man bei verkürztem Messablauf die Auslastung des Testsystems und den Durchsatz desselben verbessern kann.

Weitere vorteilhafte Ausführungen des erfindungsgemässen Verfahrens sind in den Ansprüchen 2 bis 8 widergegeben.

### ZEICHNUNGEN

Ausführungsbeispiele der Erfindung werden im Folgenden unter Bezugnahme auf die Zeichnungen näher beschrieben. Es zeigen:

**FIG. 1**      ein System ;

**FIG. 2**      ein Radsatzpaar, das in einem System getestet werden kann;

**FIG. 3**      ein Radsatzpaar mit Drehgebern, ;

**FIG. 4**      die Flanke eines ersten Zahnrades und die Flanke eines zweiten Zahnrades;

**FIG. 5**      ein Beispiel eine Messergebnisses in Form eines Kurvenschriebes, gemäss der vorliegenden Erfindung;

**FIG. 6**      ein weiteres System;

**FIG. 7A**      einen ersten Teil eines Flussdiagramms gemäss der vorliegenden Erfindung;

**FIG. 7B**      einen zweiten Teil eines Flussdiagramms gemäss der vorliegenden Erfindung;

**FIG. 8**      ein Beispiel einer Abrollvorrichtung, ;

**FIG. 9A**  eine schematische Darstellung eines ersten Softwaremoduls;

**FIG. 9B**  eine schematische Darstellung eines zweiten Softwaremoduls.

DETAILIERTE BESCHREIBUNG

Die Erfindung ist das Verfahren, so wie in den Ansprüchen definiert.

Der Einfachheit halber ist in der vorliegenden Beschreibung hauptsächlich von Radsätzen und Radsatzpaaren die Rede. Der Begriff Radsatz wird in der Beschreibung als Oberbegriff für jegliche Arten von Zahnrädern, Stirnräder, Kegelräder (z.B. Spiralkegelräder), Tellerräder, Ritzel usw. verwendet. Die vorliegende Erfindung ist besonders für das Testen von achsverschobenen und nicht-achsverschobenen Kegelradgetrieben geeignet. Es ist dabei unerheblich, ob es sich um innenverzahnte oder außenverzahnte Zahnräder handelt, oder ob die Zahnräder gerad- bzw. schrägverzahnt sind.

In der vorliegenden Beschreibung ist mehrfach von der geeigneten Positionierung eines Radsatzpaares (z.B. zweier Zahnräder) die Rede. Es sei angemerkt, dass die geeignete Positionierung von verschiedenen Vorgaben abhängen kann. Handelt es sich bei dem Zahnradpaar um ein Kegelradgetriebe, dass für den Einbau in einen LKW bestimmt ist, so kommen andere Kriterien bei der Beurteilung zur Anwendung als bei einem Kegelradgetriebe für den Einbau in einen Kleinwagen. Darüber hinaus hat jeder Anwender andere Vorgaben bzw. Definitionen, die bei der Ermittlung der geeigneten Positionierung von Radsatzpaaren bzw. bei der Qualitätsprüfung derselben zur Anwendung kommen.

Eine geeignete Einbaulage kann zum Beispiel dann vorliegen, wenn der Körperschall am geringsten ist, wobei ein geringer Körperschall normalerweise eine gute Laufruhe gewährleistet. Andere Einsatzgebiete diktieren eventuell andere Vorgaben was die geeignete Einbaulage angeht. So kann zum Beispiel die Haltbarkeit oder das Laufverhalten des Getriebes ein wichtiges Kriterium bei der Definition der geeigneten Einbaulage sein.

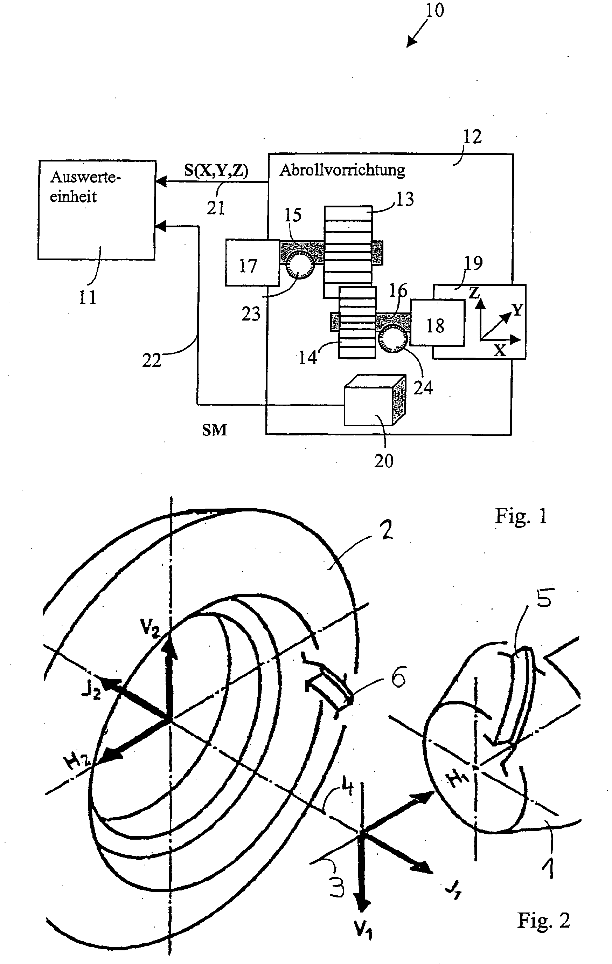

Ein erstes Ausführungsbeispiel der vorliegenden Erfindung wird anhand der schematischen Darstellung in Figur 1 beschrieben. In dieser Figur ist ein System 10 gezeigt, das im Wesentlichen aus einer Auswerteeinheit 11 und einer Abrollvorrichtung 12 besteht. Ein derartiges System 10 kann zum Beispiel zum Testen eines Zahnradpaares 13, 14 eingesetzt werden. Beim erfindungsgemässen Testen wird eine geeignete Positionierung des ersten Zahnrades 13 in Bezug auf das zweite Zahnrad 14 ermittelt.

Die gezeigte Abrollvorrichtung 12 umfasst eine erste Spindel 15 auf der das erste Zahnrad 13 befestigt werden kann. Die erste Spindel 15 wird von einem Antrieb 17 in eine Rotation um die Spindelachse versetzt. Das zweite Zahnrad 14 sitzt auf einer zweiten Spindel 16. Ein zweiter Antrieb 18 ist an der zweiten Spindel 16 vorgesehen, um die zweite Spindel 16 entweder mit einem positiven (Zugzustand) oder einem negativen Drehmoment (Schubzustand) zu beaufschlagen. Um die beiden Zahnräder 13 und 14 in Eingriff bringen zu können, weist die Abrollvorrichtung eine Positioniereinheit 19 auf, welche dazu eingesetzt werden kann gezielt die Positionierung der beiden Zahnräder 13, 14 gegeneinander zu verändern. Wie grafisch durch das X,Y,Z-Koordinatensystem angedeutet, kann die Positionierung im 3-dimensionalen Raum erfolgen. Üblicherweise wird die Position der beiden Zahnräder 13 und 14 in Bezug zueinander nicht im kartesischen Koordinatensystem, sondern im V, H,J-Koordinatensystem beschrieben.

Ein Kegelrad 1 (Ritzel) mit einem zugehörigen Tellerrad 2 ist in Figur 2 gezeigt. Die Rotationsachse 3 des Kegelrades 1 und die Rotationsachse 4 des Tellerrades 2 stehen in dem gezeigten Bild zueinander senkrecht. Für jedes der Räder ist ein eigenes V,H,J-Koordinatensystem definiert. Das V,H,J-Koordinatensystem des Kegelrades 1 ist mit dem Index 1 versehen, wohingegen das V,H,J-Koordinatensystem des Tellerrades 2 mit dem Index 2 versehen ist. Aus diesen beiden V,H,J-Koordinatensystemen kann man die Positionierung des Kegelrades 1 in Bezug auf die des Tellerrades 2 berechnen. Der Einfachheit halber sind in Figur 2 nur zwei Zähne 5, 6 angedeutet.

Da es nicht erfindungswesentlich ist, welches Koordinatensystem zur Beschreibung der Positionen der Zahnräder zur Anwendung kommt, wird im Folgenden hauptsächlich der Begriff Positionierung verwendet, der aussagen soll, dass es letztendlich auf die Position des einen Zahnrades in Bezug auf die Position des anderen Zahnrades ankommt.

Das gezeigte Abrollsystem 12 ist in der Lage Signale S(X,Y,Z) über eine Kommunikationsverbindung 21 an die Auswerteeinheit 11 zu übermitteln. Die Signale S(X,Y,Z) beschreiben die Positionierung des zu testenden Radsatzpaares. Die Verwendung der Symbole X,Y, Z soll anzeigen, dass auch hier die Positionierung durch die Koordinaten eines Koordinatensystems beschrieben werden kann. Des Weiteren umfasst die Abrollvorrichtung 12 einen Messwertgeber 20, der ein zeitabhängiges Messsignal SM(t) über eine Kommunikationsverbindung 22 an die Auswerteeinheit 11 übermittelt. Vorzugsweise handelt es sich bei der Kommunikationsverbindung 22 um eine Verbindung mittels eines abgeschirmten Kabels. Je nach Anwendungsgebiet des Systems 10 kann es sich zum Beispiel um einen aktiven oder einen passiven Körperschallsensor 20 handeln. Ein solcher Körperschallsensor 20 erzeugt ein analoges Signal, das über das Geräuschverhalten bzw. die Beschleunigung der beiden Zahnräder 13, 14 Auskunft gibt, während diese aneinander abrollen. Der Körperschallsensor 20 misst also das Schwingungsverhalten und lässt dadurch eine Aussage über das Verhalten der Prüflinge 13, 14 zu. Das Signal SM(t) des Körperschallsensors 20 ist typischerweise proportional zu den auf ihn einwirkenden Kräften und wird vorzugsweise von einem Messverstärker und/oder anderen Komponenten zur Signalanpassung aufbereitet. Der Verstärker kann entweder der Auswerteeinheit vorgeschaltet oder in diese integriert sein. Wie in Figur 1 schematisch angedeutet, ist neben dem Messwertgeber 20 an jeder Spindel je ein Drehgeber 23 bzw. 24 vorgesehen. Vorzugsweise handelt es sich dabei um hochauflösende Drehgeber.

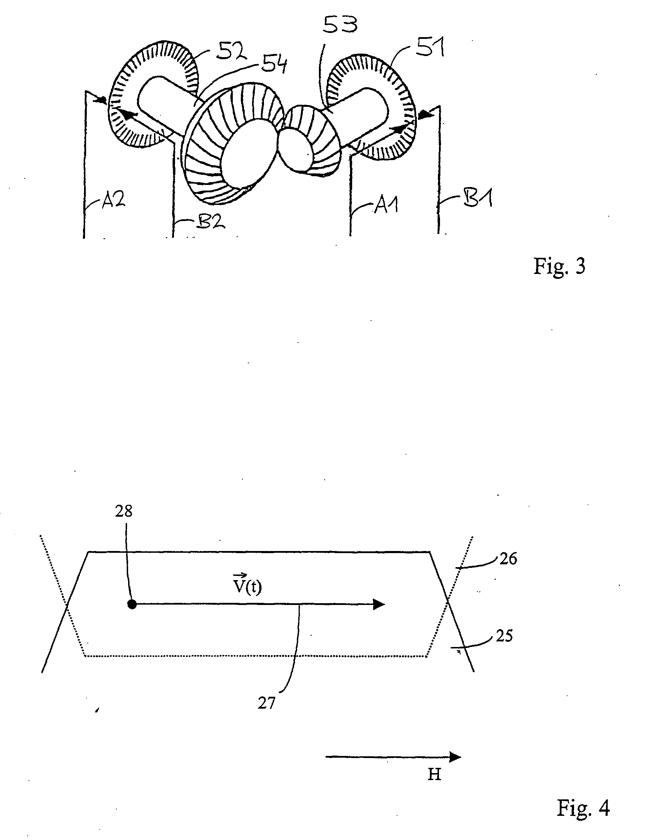

Details zur typischen Anordnung zweier Drehgeber 51 und 52 sind der Figur 3 zu entnehmen. Wie in Figur 3 gezeigt, können die Drehgeber 51, 52 direkt an die Spindeln 53 bzw. 54 angekoppelt werden. Die gezeigten optischen Scheiben der Drehgeber 51, 52 haben vorzugsweise eine Auflösung von mehreren tausend Impulsen. Die Drehgeber 51, 52 können z.B. die für Impulsgeber typischen Kanäle A1, B1 und A2, B2 zur Zählung von Impulsen und zur Erkennung von Positions- und Drehrichtungen bieten. Die Drehgeber 51, 52 können, wie gezeigt, entweder mechanisch mit den Spindeln 53, 54 verbunden sein oder induktiv bzw. optisch mit diesen gekoppelt sein.

Zusätzlich zu den explizit gezeigten Komponenten weist das System 10 eine Steuerung auf, die vorzugsweise die folgenden Schritte auszuführen in der Lage ist:

■ Verfahren der Zahnräder 13, 14 gegeneinander, bis sich diese im Eingriff befinden und eine Ausgangsposition (auch Nullposition genannt) erreicht ist.

■ Antreiben eines der beiden Zahnräder 13 oder 14, um dieses in eine Rotationsbewegung zu versetzen bei der beide Zahnräder 13, 14 gegeneinander abrollen. Die Zahnräder können dabei mit einer konstanten Drehzahl n, oder mit einer zeitlich variierenden Drehzahl n(t) angetrieben werden.

■ Verfahren der Zahnräder 13, 14 gegeneinander, wobei das Verfahren durch einen Verfahrvektor $\vec{V}(t)$ (2- oder 3-dimensional) vorgegeben ist.

Zusätzlich zu diesen Schritten kann die Steuerung verschiedene Lastzustände (Zug und Schub) erzeugen, damit man Messungen sowohl im Zugzustand als auch im Schubzustand durchführen kann. Die Lastzustände können zum Beispiel in Form von Laststufen vorgegeben werden. Vorzugsweise wird nach einer gewissen Zeit von dem Zugzustand in den Schubzustand umgeschaltet (oder umgekehrt). Dies kann zum Beispiel durch ein geeignetes Ansteuern des zweiten Antriebs erfolgen.

Während die beiden Zahnräder 13 und 14 aneinander abrollen und gegeneinander verfahren werden, übermittelt der Messwertgeber 20 das Messsignal SM(t) an die Auswerteeinheit 11. Bei dem übermittelten Messsignal SM(t) handelt es sich um ein kontinuierliches Messsignal, das während der gesamten Zeit des Verfahrens erfasst wird. Zusätzlich zu dem Messsignal SM(t) liefern die Drehgeber 23 und 24 Information an die Auswerteeinheit 11. Gemäss der vorliegenden Erfindung wird das Signal SM(t) mit der Positionierungsinformation S(X,Y,Z) in Bezug gebracht. Um dies zu erreichen, kann man das Signal mit der Positionierungsinformation S(X, Y,Z) synchronisieren. Es ist wichtig einen solchen Bezug zwischen der Positionierungsinformation S(X,Y,Z) und den aufgezeichneten Signalen herzustellen, um die geeignete Einbaulage des geprüften Zahnradpaares 13, 14 rechnerisch zu ermitteln zu können, bzw. um eine Aussage über die Qualität eines zu testenden Radsatzpaares zu ermöglichen. Die Positionierungsinformation S(X, Y,Z) kann entweder während dem Verfahren der Zahnräder 13, 14 gemessen und an die Auswerteeinheit 11 übermittelt werden, oder die Positionierungsinformation S(X,Y,Z) kann von der Ansteuerung der Abrollvorrichtung (nicht in Figur 1 gezeigt) elektronisch abgezweigt werden.

Die Auswerteeinheit 11 wertet die Signale (z.B. SM(t)) und die Positionierungsinformation S(X,Y,Z) wie folgt aus. Bei der Auswertung ist es wichtig zu berücksichtigen, dass es ein Ziel der Auswertung ist, entweder Vorgaben für die geeignete Positionierung (Einbaulage) der beiden Zahnräder 13,14 für deren späteren Einbau zu erhalten, oder die Qualität eines Radsatzpaares beurteilen zu können.

Zur Auswertung wird eine sogenannte Ordnungsanalyse durchgeführt. Dabei werden vorzugsweise aus der(n) kontinuierlich erfassten Zeitkurve(n) mehrere auszuwertende Bereiche (Blöcke) ausgewählt. Zu diesem Zweck kann man z.B. mehrere spezielle Punkte (z.B. als Funktion der Zeit t und des Ortes H) der Kurve (n) auswählen und Bereiche definieren, die diese speziellen Punkte einschliessen. Mit anderen Worten, man zerlegt die kontinuierlich erfasste Zeitkurve(n) in mehrere Blöcke. Zum Zerlegen der Kurve(n) in Blöcke kann eine Fensterfunktion zur Anwendung kommen, die in geeigneter Weise mit der Zeitkurve (z.B. SM(t)) multipliziert wird.

Vorzugsweise werden etwaige Gleichanteile (G) der Zeitkurve(n) vor dem Zerlegen in Blöcke durch Subtraktion oder einen anderweitigen Schritt entfernt. [00030] Für diese Blöcke können dann z.B. Frequenzspektren ermittelt werden (z.B. durch eine geeignete Fourier-Transformation), damit man zum Beispiel die tellerradrotationsharmonischen Anteile (normalerweise ein relativ langwelliges Zeitsignal) und/oder die ritzelrotationsharmonischen Anteile und/oder die zahneingriffsharmonischen Anteile ermitteln kann.

Aus jedem der Blöcke kann ein Kennwert abgeleitet werden, die wiederum eine hypothetische Kurve definieren. Vorzugsweise wird diese hypothetische Kurve in einem nächsten Schritt geglättet, um die Reproduzierbarkeit der Auswertung zur verbessern.

In einem weiteren Schritt der Auswertung werden nun an genau vorgegebenen Positionen, welche die Positionierung der beiden Zahnräder definieren, Kennwerte interpoliert. Bei der Auswahl eines geeigneten Interpolationsalgorithmus, der auf die hypothetische Kurve angewendet wird, ist zu berücksichtigen, dass es in der Praxis nur eine endliche Zahl von realisierbaren Einbaulagen der beiden Zahnräder 13, 14 eines Radsatzpaares gibt, da die Einbaulage beim Einbau in ein Getriebe üblicherweise durch das Einbauen von Unterlegscheiben (Distanzscheiben) definiert wird. Diese Unterlegscheiben (Shims genannt) gibt es jedoch nur in ganz bestimmten Dicken. Bei der Ermittlung der geeigneten Einbaulage muss also berücksichtigt werden, dass man beim Einbau nicht jede beliebige Positionierung realisieren kann. Es gilt hier diejenige Einbaulage zu ermitteln, die mittels Distanzscheibe(n) erzielt werden kann und die der optimalen Einbaulage am nächsten kommt.

Die Auswerteeinheit 11 kann die Vorgaben für die geeignete Positionierung der beiden Zahnräder 13, 14 auf einer Anzeige oder einem Drucker ausgeben. Alternativ oder zusätzlich können die Vorgaben abgespeichert bzw. über eine Kommunikationsverbindung zur weiteren Verarbeitung zur Verfügung gestellt werden.

Das Verfahren der beiden Zahnräder 13 und 14 gegeneinander wird schematisch in Figur 4 dargestellt. In Figur 4 ist die Flanke eines Zahnes 26 des Zahnrades 13 und die Flanke eines Zahnes 25 des Zahnrades 14 gezeigt. Der Verfahrvektor 27 $\vec{V}(t)$ ist als Pfeil dargestellt, der die Verschiebung des Zahnrades 13 in Bezug auf das Zahnrad 14 verkörpert. Diese Verschiebung beginnt an einem Startpunkt 28 (Nullpunkt) und verläuft in dem gezeigten Beispiel parallel zur H-Koordinatenachse des V,H,J-Koordinatensystems.

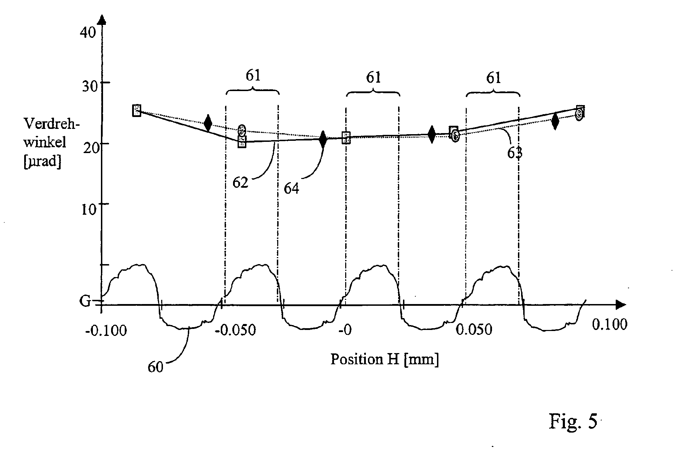

In einer weiteren Ausführungsform der Erfindung kann man anstatt des Körperschalls den sogenannten Einflankenwälzfehler durch eine Einflankenwälzprüfung (EWP) messen. Die Einflankenwälzprüfung erlaubt es Schlüsse über Drehfehler zu ziehen. Das Resultat einer Einflankenwälzprüfung gemäss der vorliegenden Erfindung ist grafisch in dem schematisierten Diagramm in Figur 5 dargestellt. Die Abszisse des Diagramms beschreibt die Positionierung zweier Zahnräder in mm. Die Ordinate gibt den Verdrehfehler in der Einheit rad (peak-to-peak) an. Die Signale der beiden Drehgeber werden vorzugsweise subtrahiert, um ein Differenzsignal zu bilden. Dieses Differenzsignal 60 beschreibt den Drehfehler, der um den Gleichanteil G nach oben und unten schwankt. Aus der kontinuierlich erfassten Drehfehlerkurve 60 werden mehrere auszuwertende Bereiche 61 (Blöcke) ausgewählt. Um die auszuwertende Bereiche 61 (Blöcke) zu definieren, können mehrere spezielle Punkte der Drehfehlerkurve 60 ausgewählt werden. Aus jedem dieser Blöcke 61 wird dann mindestens je ein Wert ermittelt. Diese Werte sind in Figur 5 durch graue Rechtecke dargestellt. Verbindet man die grauen Rechtecke, so erhält man eine hypothetische Kurve 62 (durchgezogene Line). Vorzugsweise wird diese hypothetische Kurve 62 nun rechnerisch geglättet. Man erhält dadurch die geglättete Kurve 63, deren Verlauf durch graue Ovale dargestellt ist. Der besseren Übersichtlichkeit halber ist die geglättete Kurve 63 gestrichelt dargestellt. Mittels Interpolation wird nun aus der geglätteten Kurve 63 eine endliche Zahl von diskreten Punkten berechnet. Diese diskreten Punkte (als schwarze Rauten dargestellt) definieren die verschiedenen Einbaulagen, die durch das Einbringen von Distanzscheiben beim Zusammenbau des getesteten Radsatzpaares erzielt werden können. In dem in Figur 5 gezeigten Beispiel kommt der Punkt 64 der idealen Einbaulage am nächsten. Mit anderen Worten, der Punkt 64 entspricht der geeigneten Positionierung, gemäss der Erfindung.

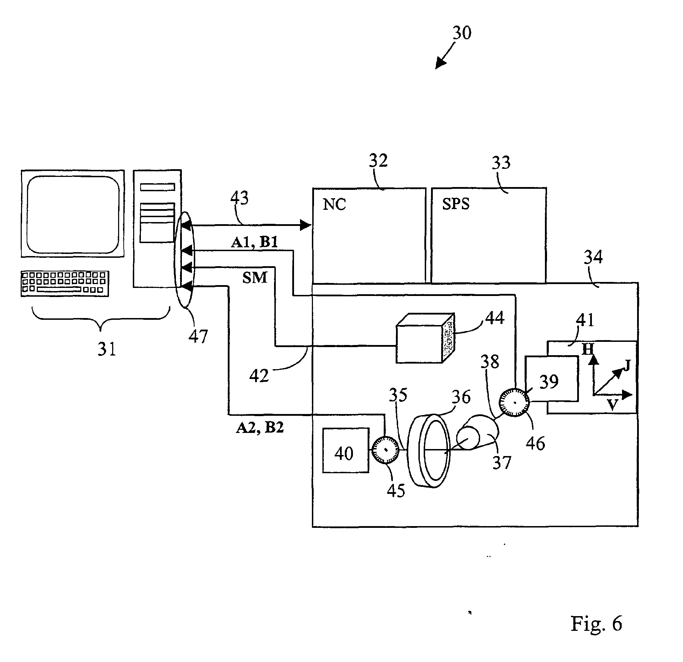

Eine andere Ausführungsform der Erfindung ist in Figur 6 gezeigt. Das gezeigte System 30 weist wiederum eine Auswerteeinheit und eine Abrolleinheit auf. Die Abrolleinheit umfasst eine Bahnsteuerung 32 (z.B. eine NC-Steuerung), eine speicherprogrammierbare Steuerung (SPS) 33 und eine Vorrichtung 34. Die Bahnsteuerung 32 ist eine rechnergestützte numerische Steuerung. Es können mit der Bahnsteuerung 32 die verschiedenen notwendigen Arbeitsabläufe der Abrollvorrichtung realisiert werden. Die SPS 33 realisiert die Ablaufsteuerung. Die Vorrichtung 34 umfasst eine erste Spindel 35 (nur durch die Spindelachse dargestellt) auf der das erste Zahnrad 36 befestigt werden kann. Im gezeigten Beispiel handelt es sich bei dem ersten Zahnrad 36 um ein Tellerrad in schematisierter Darstellung. Die erste Spindel 35 wird von einem Antrieb 40 in eine Rotation um die Spindelachse versetzt. Das zweite Zahnrad 37 (im gezeigten Fall ein Ritzel in schematisierter Darstellung) sitzt auf einer zweiten Spindel 38. Vorzugsweise ist ein zweiter Antrieb 39 an der zweiten Spindel 38 vorgesehen, um die zweite Spindel 38 entweder mit einem positiven oder einem negativen Drehmoment zu beaufschlagen. Um die beiden Zahnräder 36 und 37 in Eingriff bringen zu können, weist die Vorrichtung 34 eine Positioniereinheit 41 auf, welche dazu eingesetzt werden kann, die Positionierung der beiden Zahnräder 36, 37 gezielt gegeneinander zu verändern. Wie grafisch durch das H,V,J Koordinatensystem angedeutet, kann die Positionierung im 3-dimensionalen Raum erfolgen.

Das gezeigte Abrollsystem 32, 33, 34 ist in der Lage Signale S(H,J,V) über eine Kommunikationsverbindung 43 an die Auswerteeinheit 31 zu übermitteln. Die Signale S(H,J,V) beschreiben die momentane Positionierung der Zahnräder 36 und 37. Des Weiteren umfasst die Abrollvorrichtung 32, 33, 34 einen Messwertgeber 44, der ein analoges Messsignal SM(t) über eine Kommunikationsverbindung 42 an die Auswerteeinheit 31 übermittelt. Vorzugsweise wird ein abgeschirmtes Kabel verwendet, um störende Einflüsse zu unterdrücken. Wie in Figur 6 schematisch dargestellt, ist neben dem Messwertgeber 44 an jeder Spindel je ein Drehgeber 45 bzw. 46 vorgesehen. Die Drehgeber 45 und 46 sind auch mit der Auswerteeinheit 31 über Kommunikationsverbindungen A1, B1 und A2, B2 verbunden.

Vorzugsweise hat die Auswerteeinheit 31 Eingangskanäle für die synchrone Erfassung der Positionierungsinformation S(H,J,V) (z.B. je einen Eingangskanal für ein analoges V, H und J-Signal) und einen Eingangskanal für das analoge Signal vom Körperschall-Messwertgeber 44. Die analogen Eingangskanäle sind vorzugsweise mit AD-Wandlern ausgerüstet. Vorzugsweise weist die Auswerteeinheit 31 zusätzlich Eingangskanäle für die Signale der Drehgeber 45, 46 auf. Falls den Drehgebern 45, 46 Inkremental-Encoder nachgeschaltet sind, so sind diese Eingangskanäle digital ausgelegt. Die Eingangskanäle sind gesamthaft mit 47 gekennzeichnet.

Idealerweise umfasst die Auswerteeinheit 31 ein Auswertemodul (z.B. in Form einer Steckkarte) mit digitalen Signal Prozessoren (DSPs), die für die Verarbeitung digitaler und analoger Signale ausgelegt sind.

Die Signale, welche die Auswerteeinheit 31 empfängt, werden vorzugsweise als lückenlose Zeitreihen (Zeitsignale) gespeichert. Hierzu eignet sich z.B. ein RAM (random access memory).

Die Auswerteeinheit 31 umfasst neben den erwähnten Eingangskanälen und dem Auswertemodul einen Computer, der vorzugsweise mit einem Laufwerk, Schnittstellen für Peripheriegeräte, einem Bildschirm und einer Tastatur ausgestattet ist.

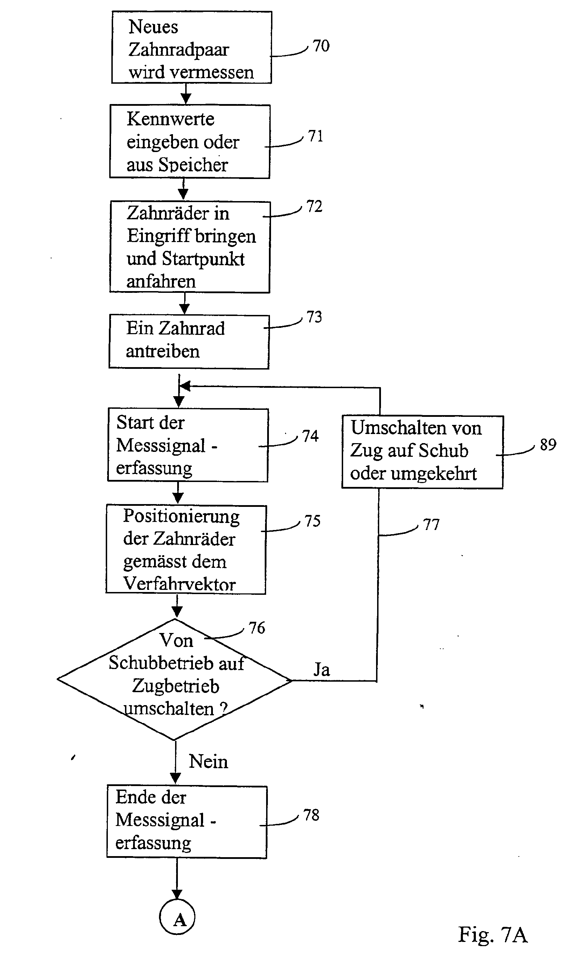

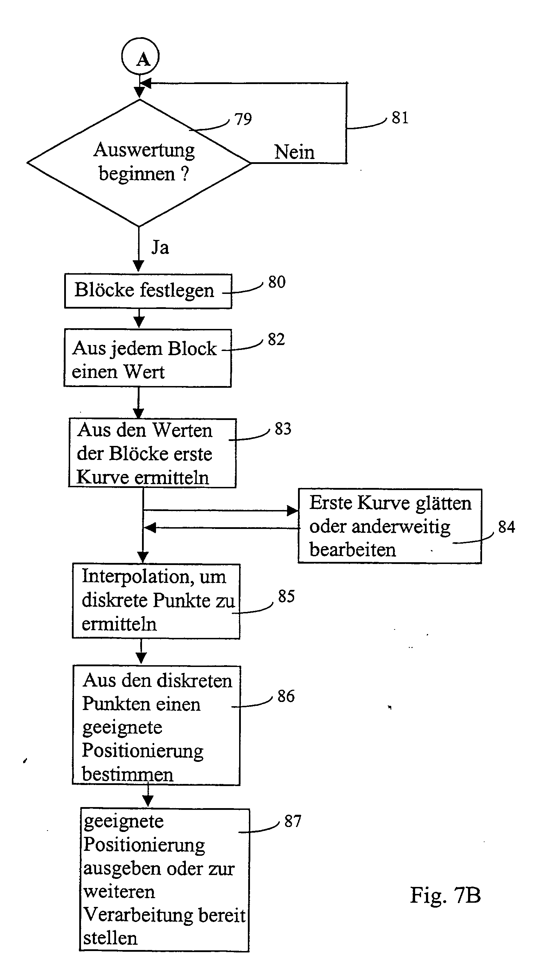

Das erfindungsgemässe Verfahren wird im Folgenden anhand eines schematisierten Flussdiagramms näher erklärt. Das entsprechende Flussdiagramm ist in Figur 7A und 7B dargestellt. Das Verfahren beginnt (Schritt 70) jeweils nach dem ein neu zu vermessendes/prüfendes Zahnradpaar in die Abrollvorrichtung eingesetzt wurde. Das erfindungsgemässe Verfahren braucht gewisse Vorgaben (Kennwerte und/oder Parameter), um eine Messung durchführen zu können. Die entsprechenden Kennwerte und/oder Parameter werden entweder aus einem Speicher abgerufen, oder sie können in das Messsystem eingegeben werden (Schritt 71). Es ist auch denkbar, dass ein Teil der Kennwerte und/oder Parameter aus einem Speicher geladen wird und das ein anderer Teil vom Bediener der Anlage eingegeben wird. Dann werden die beiden Zahnräder in Eingriff gebracht und ein Startpunkt angefahren (Schritt 72). Dieser Startpunkt gilt aus Ausgangspunkt für den durch den Verfahrvektor $\vec{V}(t)$ definierten Verfahrprozess. Mindestens eines der beiden Zahnräder wird nun durch einen Antrieb angetrieben und dadurch in eine Rotationsbewegung versetzt (Schritt 73). Das jeweils andere Zahnrad rollt an dem angetriebenen Zahnrad ab.

Das Erfassen der Messsignale (z.B. des Signals SM(t), das von einem Körperschallsensor bereit gestellt wird, und der Signale der Drehgeber) wird gestartet (Schritt 74). Während dem Erfassen der Messsignale wird die Position des einen Zahnrades in Bezug auf die Position des anderen Zahnrades gemäss dem Verfahrvektor $\vec{V}(t)$ geändert (Schritt 75).

Je nach Messverfahren werden die Schritte 74 und 75 einmal im Schubbetrieb und einmal im Zugbetrieb durchgeführt. Die entsprechende Verzweigung im Flussdiagramm findet im Schritt 76 statt. Wird zum Beispiel die erste Messung im Zugbetrieb durchgeführt und wünscht der Benutzer des Messsystems auch einen Durchgang im Schubbetrieb, so verzweigt das Verfahren im Schritt 76 und folgt der Verbindung 77 zurück zum Schritt 74. Im Schritt 89 wird vorher von Zug auf Schub umgeschaltet (oder umgekehrt).

Die Messsignalerfassung endet im Schritt 78. Üblicherweise werden die Messsignale zwischengespeichert. Die Fortsetzung des Verfahrens ist in Figur 7B gezeigt. Die in Figur 7B gezeigten Schritte können zum Teil parallel zu den Schritten 74 - 78 ausgeführt werden. Der Verzweigungsschritt 79 soll anzeigen, dass die Auswertung auch zu einem späteren Zeitpunkt erfolgen kann. In diesem Fall würde der Verlauf über den Zweig 81 an den Beginn der Auswertung zurück führen.

In einem ersten Schritt 80 wird die ermittelte Zeitkurve(n) in Blöcke zerlegt. Die Blöcke können direkt aneinander angrenzen, können einander überlappen, oder können die Kurve(n) in mehrere unabhängige Segmente teilen (siehe z.B. Figur 5). Vorzugsweise wird dann im Schritt 82 aus jedem Block mindestens ein Wert ermittelt. Die entsprechenden Werte können dann rechnerisch zu einer hypothetischen Kurve verbunden werden (Schritt 83).

In einem optionalen Schritt 84 kann die so ermittelte hypothetische Kurve geglättet werden, um die Reproduzierbarkeit der Auswertung zu verbessern.

Es folgt ein Interpolationsschritt 85, der dazu dient aus der vorher ermittelten Kurve mehrere diskrete Punkte zu ermitteln. Aus diesen diskreten Punkten wird dann ein Punkt als geeignete Positionierung bestimmt (Schritt 86). Die geeignete Positionierung wird ausgegeben oder für die weitere Verarbeitung bereit gestellt. Die Positionierung kann zum Beispiel zusammen mit der Seriennummer und anderen charakteristischen Merkmalen des Zahnradpaares auf einem Messprotokoll ausgedruckt werden. Gleichzeitig kann die Positionierung in die Bestellung einer geeigneten Distanzscheibe umgesetzt werden. Diese Bestellung kann über eine Kommunikationsverbindung an ein Warenlager übermittelt werden.

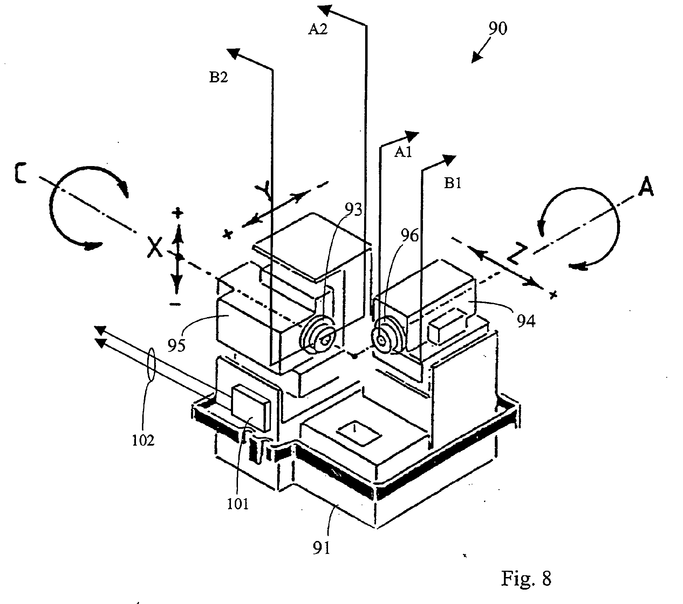

Ein Beispiel einer Abrollvorrichtung 90 gemäss der vorliegenden Erfindung ist in Figur 8 gezeigt. Die Elemente der Abrollvorrichtung 90 sind auf einem Maschinenbett 91 montiert. Ein zu prüfendes Tellerrad (nicht gezeigt) wird auf der Spindel 93 montiert. Die Spindel 93 ist an einem Wälzstock 95 drehbar befestigt, der in Richtung der Doppelpfeile X und Y verschiebbar gelagert ist. Im gezeigten Beispiel ist die Spindel 96 drehbar an einem Spindelstock 94 befestigt. Die Spindel 96 trägt das zu prüfende Ritzel (nicht gezeigt). Sowohl das Ritzel als auch das Tellerrad können in der üblichen Art und Weise mittels automatischer Spannvorrichtungen an den Spindeln 96 bzw. 93 befestigt werden. Die Spindeln 93 und 94 haben einen stufenlos drehzahlverstellbaren Antrieb, der das Tellerrad um die Drehachse C, respektive das Ritzel um die Drehachse A in Rotation versetzt. Der Antrieb kann zum Beispiel durch die Regelelektronik eines Steuerungscomputers (nicht in Figur 8 gezeigt) angetrieben werden. Weitere geregelte Antriebe können für die Positionierung des Tellerrades in Bezug auf das Ritzel verwendet werden. Ein geregelter Antrieb kann zum Beispiel den Wälzstock 95 (parallel zu den Doppelpfeilen X und Y) verschieben und ein Antrieb den Spindelstock 94 (Doppelpfeil C) verschieben. Die aufgeführten Antriebe sind an sich bekannt und daher in der Figur 8 nicht dargestellt. Ebenfalls nicht dargestellt ist der elektrische Schaltschrank mit dem Steuerungscomputer, welcher in an sich bekannter Art und Weise neben der Abrollvorrichtung 90 angeordnet sein kann. An den Spindeln 93 und 96 ist je ein Drehgeber vorgesehen. Die Drehgeber an sich sind nicht in Figur 8 gezeigt, aber es sind die beiden Signalleitungen A1, B1 des ersten Drehgebers und die beiden Signalleitungen A2, B2 des zweiten Drehgebers dargestellt, die mit der Auswerteeinheit verbunden sind. Ein Körperschallsensor 101 ist im gezeigten Beispiel an dem Maschinenbett 91 befestigt. Die beiden Signalleitungen einer Verbindungsleitung 102 sind mit der Auswerteeinheit verbunden.

Das eingangs beschriebene Prüfverfahren für das Ermitteln einer geeigneten Einbaulage des Ritzels in Bezug auf das Tellerrad kann in der gezeigten Abrollvorrichtung ausgeführt werden.

Eine weitere Ausführungsform zeichnet sich dadurch aus, dass man den Körperschall und den Einflankenwälzfehler messen kann.

Das Auswerteverfahren gemäss der vorliegenden Erfindung kann derart ausgeführt sein, dass man verschiedene positionsabhängige Toleranzen vorgeben kann, die bei der Auswertung Berücksichtigung finden.

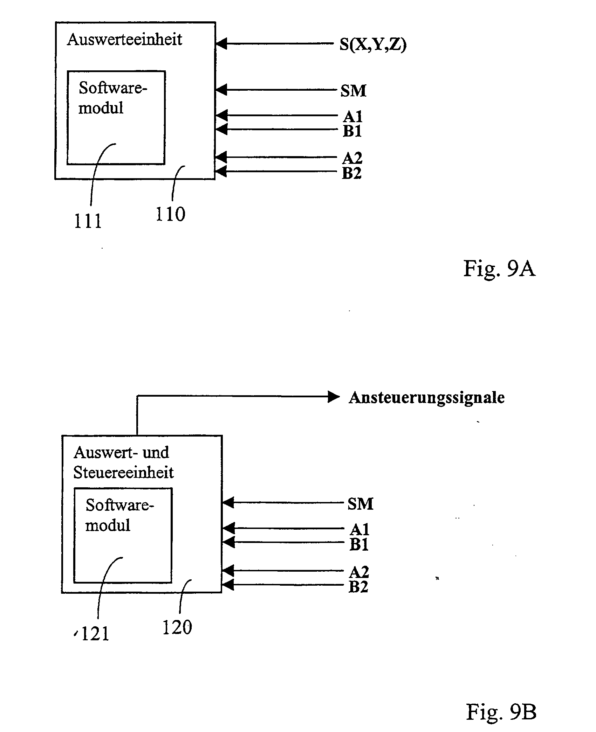

Vorteilhafterweise kann die Auswerteeinheit 110 ein Softwaremodul 111 umfassen, das die Auswertung der Messwerte in Übereinstimmung mit dem erfindungsgemässen Verfahren durchführt. Ein solches Softwaremodul 111 ist in Figur 9A schematisch gezeigt. Die Auswerteeinheit 110 empfängt die folgenden Signale für die Auswertung: S(X,Y,Z), SM(t) und A1, B1, und A2, B2. Vorzugsweise umfasst die Auswerteeinheit 110 ein Auswertemodul (nicht gezeigt), um die Signale zu empfangen und aufzubereiten.

In einer weiteren Ausführungsform kann eine Auswerte- und Steuereinheit 120 ein Softwaremodul 121 umfassen, das auch die Ansteuerung der Abrolleinheit übernimmt. In diesem Fall wird das gesamte Verfahren durch dieses Softwaremodul 121 gesteuert und auch die Ergebnisse ausgewertet. Das entsprechende Softwaremodul 121 ist in Figur 9B zu sehen. Die Auswerte- und Steuereinheit 120 empfängt die folgenden Signale für die Auswertung: SM(t) und A1, B1, und A2, B2 und steuert die Ablaufvorrichtung über die "Ansteuerungssignale". Vorzugsweise umfasst die Auswerteeinheit 120 ein Auswertemodul (nicht gezeigt), um die Signale zu empfangen und aufzubereiten. Das Signal S(X,Y,Z) braucht der Auswerteeinheit 120 nicht separat zugeführt zu werden, da die Auswerteeinheit 120 die Abrollvorrichtung mit den Ansteuerungssignalen ansteuert und somit bereits im Besitz der Positionierungsinformation ist.

Vorzugsweise erlauben es die Softwaremodule 111 bzw. 121 gewisse Signalverarbeitungsparameter für die analogen Eingangskanäle der Auswerteeinheit 110 bzw. 120 vorzugeben.

Die vorliegende Erfindung ist besonders für die Qualitätsüberwachung/Qualitätsprüfung und das Testen von Kegelräderpaaren geeignet. Sie kann zum Beispiel durch die Automobilindustrie bei der Produktion zur 100%-Prüfung von Kegelradgetrieben zur Anwendung gebracht werden. Derartige Qualitätsoptimierungsprozesse werden immer wichtiger, um die von den Herstellern geforderten Qualitätsvorgaben bei akzeptablen Herstellungskosten erzielen zu können.

Die vorliegende Erfindung kann Bestandteil eines Prüfstandes oder einer Testmaschine sein, die in der industriellen Fertigung zum Einsatz kommt. Das erfindungsgemässe System kann zum Beispiel in eine Zahnradgetriebe-Produktion integriert werden.

Ein System gemäss der Erfindung erlaubt hochgenaue und reproduzierbare Messungen und Analysen von Radsatzpaaren.

**Patentansprüche**

1. Verfahren zur Ermittlung einer geeigneten Einbaulage und/ oder zum Testen eines ersten Zahnrades (13; 36) in Verbindung mit einem zweiten Zahnrad (14; 37), mit den Schritten

   ■ Verfahren des ersten Zahnrades (13; 36) in Bezug auf das zweite Zahnrad (14; 37), um die beiden Zahnräder (13, 14; 36, 37) in Eingriff zu bringen und um einen Startpunkt einzustellen,
   ■ Antreiben des ersten Zahnrades (13; 36), um dieses in eine Drehbewegung zu versetzen bei der das zweite Zahnrad (14; 37) an dem ersten Zahnrad (13; 36) abrollt,
   ■ Verfahren des ersten Zahnrades (13; 36) in Bezug auf das zweite Zahnrad (14; 37) entlang eines Verfahrvektors ($\vec{V}(t)$);
   ■ kontinuierliches Aufnehmen eines analogen Messsignals, welches das Schwingungsverhalten der beiden Zahnräder (13, 14; 36, 37) beschreibt,
   ■ Aufnehmen von Signalen, die das Drehverhalten der beiden Zahnräder (13, 14; 36, 37) beschreiben,

   **dadurch gekennzeichnet, dass** das Verfahren weiter die folgenden Schritten umfasst:

   ■ Zerlegen des analogen Messsignals, welches das Schwingungsverhalten der beiden Zahnräder (13, 14; 36, 37) und das Drehverhalten der beiden Zahnräder (13, 14; 36, 37) beschreibt in mehrere Blöcke,

■ Ableiten eines Kennwerts aus jedem der Blöcke,

■ Ermitteln einer hypothetischen Kurve durch Verbinden der Kennwerte aus jedem der Blöcke,

■ Interpolieren der hypothetischen Kurve um die geeignete Positionierung zu ermitteln.

2. Verfahren nach Anspruch 1, wobei das analoge Messsignal von einem Messwertaufnehmer (20; 44) zum Aufnehmen von Körperschall stammt.

3. Verfahren nach einem der Ansprüche 1 oder 2, wobei bei dem Ermitteln der hypothetischen Kurve ein oder mehrere vorgegebene Algorithmen zur Anwendung kommen, um aus der Positionierungsinformation, dem analogen Messsignal und/oder den Signalen, die das Drehverhalten beschreiben, die geeigneten Positionierung zu ermitteln.

4. Verfahren nach einem der Ansprüche 1 oder 2, wobei aus dem analogen Messsignal und/oder den Signalen, die das Drehverhalten beschreiben, rechnerisch eine kontinuierliche Kurve ermittelt wird.

5. Verfahren nach einem der Ansprüche 1 bis 4, wobei aus dem analogen Messsignal und/oder den Signalen, die das Drehverhalten beschreiben, mehrere Ausschnitt ausgewählt und ausgewertet werden.

6. Verfahren nach einem der Ansprüche 1 bis 4, wobei das Aufnehmen der Signale im Zugzustand und im Schubzustand erfolgt.

7. Verfahren nach einem der Ansprüche 1 bis 6, wobei die hypothetische Kurve durch Anwendung eines Algorithmus geglättet wird.

8. Verfahren nach einem der Ansprüche 1 bis 7, wobei die geeignete Positionierung abgespeichert und/oder ausgedruckt und/oder auf einer Anzeigeeinheit angezeigt wird.

**Claims**

1. A method for ascertaining a suitable mounting position and/or for testing a first gear wheel (13; 36) in connection with a second gear wheel (14; 37), with the steps:

■ moving the first gear wheel (13; 36) in relation to the second gear wheel (14; 37), in order to engage the two gear wheels (13, 14; 36, 37) and set a starting point,

■ driving the first gear wheel (13; 36), in order to set it into a rotational movement, during which the second gear wheel (14; 37) rolls on the first gear wheel (13; 36),

■ moving the first gear wheel (13; 36) in relation to the second gear wheel (14; 37) along a movement vector ($\vec{V}(t)$);

■ continuously recording an analog measuring signal, which describes the oscillation behavior of the two gear wheels (13, 14; 36, 37),

■ recording signals which describe the rotational behavior of the two gear wheels (13, 14; 36, 37),

**characterized in that** the method also comprises the following steps:

■ decomposing the analog measuring signal, which describes the oscillation behavior of the two gear wheels (13, 14; 36, 37) and the rotational behavior of the two gear wheels (13, 14; 36, 37), into multiple blocks,

■ deriving a characteristic value from each of the blocks,

■ ascertaining a hypothetical curve by connecting the characteristic values from each of the blocks,

■ interpolating the hypothetic curve in order to ascertain the suitable positioning.

2. Method according to claim 1, wherein the analog measuring signal originates from a measured value recorder (20; 44) for recording structure-borne noise.

3. Method according to one of the claims 1 or 2, wherein one or more predetermined algorithms are used for the ascertainment of the hypothetical curve, in order to ascertain the suitable positioning from the positioning information, the analog measuring signal, and/or the signals which describe the rotational behavior.

4. Method according to one of the claims 1 or 2, wherein a continuous curve is ascertained by means of calculation from the analog measuring signal and/or the signals which describe the rotational behavior.

5. Method according to one of the claims 1 through 4, wherein multiple sections are selected and analyzed from the analog measuring signal and/or the signals which describe the rotational behavior.

6. Method according to one of the claims 1 through 4, wherein the recording of the signals is performed in the traction state and in the thrust state.

7. Method according to one of the claims 1 through 6, wherein the hypothetical curve is smoothed by application of an algorithm.

8. Method according to one of the claims 1 through 7, wherein the suitable positioning is stored and/or printed out and/or displayed on a display unit.

**Revendications**

1. Procédé de détermination d'une position de montage appropriée et/ou de test d'une première roue dentée (13 ; 36) en relation avec une seconde roue dentée (14 ; 37), comportant les étapes :

   ■ déplacement de la première roue dentée (13 ; 36) par rapport à la seconde roue dentée (14 ; 37) pour amener les deux roues dentées (13, 14 ; 36, 37) en prise et régler un point de départ,
   ■ entraînement de la première roue dentée (13 ; 36) pour la déplacer dans un mouvement de rotation dans lequel la seconde roue dentée (14 ; 37) roule contre la première roue dentée (13 ; 36),
   ■ déplacement de la première roue dentée (13 ; 36) par rapport à la seconde roue dentée (14 ; 37) le long d'un vecteur de déplacement ($\overline{V}$(t)),
   ■ enregistrement continu d'un signal de mesure analogique qui décrit le comportement aux vibrations des deux roues dentées (13, 14 ; 36, 37),
   ■ enregistrement de signaux qui décrivent le comportement en rotation des deux roues dentées (13, 14 ; 36, 37),

   **caractérisé en ce que** le procédé comprend en outre les étapes suivantes :

   ■ décomposition du signal analogique de mesure, qui décrit le comportement aux vibrations des deux roues dentées (13, 14 ; 36, 37) et le comportement en rotation des deux roues dentées (13, 14 ; 36, 37), en plusieurs blocs,
   ■ dérivation d'une valeur caractéristique à partir de chacun des blocs,
   ■ détermination d'une courbe hypothétique en reliant les valeurs caractéristiques issues de chaque bloc,
   ■ interpolation de la courbe hypothétique pour déterminer le positionnement approprié.

2. Procédé selon la revendication 1, dans lequel le signal analogique de mesure provient d'un capteur de mesure (20 ; 44) permettant de capter le bruit de structure.

3. Procédé selon l'une des revendications 1 ou 2, dans lequel lors de la détermination de la courbe hypothétique, on utilise un ou plusieurs algorithmes prédéfinis pour déterminer le positionnement approprié à partir de l'information de positionnement, du signal analogique de mesure et/ou des signaux qui décrivent le comportement en rotation.

4. Procédé selon l'une des revendications 1 ou 2, dans lequel, à partir du signal analogique de mesure et/ou des signaux qui décrivent le comportement en rotation, on détermine par calcul une courbe continue.

5. Procédé selon l'une des revendications 1 à 4, dans lequel, à partir du signal analogique de mesure et/ou des signaux qui décrivent le comportement en rotation, on sélectionne et on évalue plusieurs secteurs.

6. Procédé selon l'une des revendications 1 à 4, dans lequel l'enregistrement des signaux se fait à l'état tiré et à l'état poussé.

7. Procédé selon l'une des revendications 1 à 6, dans lequel la courbe hypothétique est lissée en utilisant un algorithme.

8. Procédé selon l'une des revendications 1 à 7, dans lequel le positionnement approprié est mémorisé et/ou imprimé et/ou affiché sur une unité d'affichage.

Auswerte-einheit

Abrollvorrichtung

S(X,Y,Z)

SM

Fig. 1

Fig. 2

Fig. 3

$\vec{V}(t)$

H

Fig. 4

Fig. 5

Fig. 6

Neues
Zahnradpaar
wird vermessen ⟋ 70

Kennwerte
eingeben oder
aus Speicher ⟋ 71

Zahnräder in
Eingriff bringen
und Startpunkt
anfahren ⟋ 72

Ein Zahnrad
antreiben ⟋ 73

Start der
Messsignal -
erfassung ⟋ 74

Umschalten von
Zug auf Schub
oder umgekehrt ⟋ 89

Positionierung
der Zahnräder
gemässt dem
Verfahrvektor ⟋ 75

⟋ 77

Von
Schubbetrieb auf
Zugbetrieb
umschalten ? ⟋ 76

Ja

Nein

Ende der
Messsignal -
erfassung ⟋ 78

(A)

Fig. 7A

(A)

Auswertung
beginnen ?    79    Nein    81

Ja

Blöcke festlegen    80

Aus jedem Block
einen Wert    82

Aus den Werten
der Blöcke erste
Kurve ermitteln    83

Erste Kurve glätten
oder anderweitig
bearbeiten    84

Interpolation, um
diskrete Punkte zu
ermitteln    85

Aus den diskreten
Punkten einen
geeignete
Positionierung
bestimmen    86

geeignete
Positionierung
ausgeben oder zur
weiteren
Verarbeitung bereit
stellen    87

Fig. 7B

Fig. 8

Auswerteeinheit

Softwaremodul

111   110

S(X,Y,Z)

SM
A1
B1
A2
B2

Fig. 9A

Ansteuerungssignale

Auswert- und
Steuereeinheit

Softwaremodul

121   120

SM
A1
B1
A2
B2

Fig. 9B